# EUROPEAN PATENT APPLICATION

(11) **EP 3 779 586 A1**
(43) Date of publication of application: **17.02.2021**
(21) Application number: 19781067.4
(22) Date of filing: 04.04.2019
(51) Int. Cl.: G03B 3/02, G03B 15/03, G03B 17/56, F16M 11/04, B23Q 1/25

(54) **COMPACT EQUIPMENT FOR EXTREME MACRO PHOTOGRAPHY**

(30) Priority: 04.04.2018 ES 201830331
(71) Applicant: Consejo Superior De Investigaciones Científicas (CSIC), 28006 Madrid (ES)
(72) Inventor: PRIETO BARRANCO, José, 28049 MADRID (ES); GOBERNA SELMA, Consuelo, 28049 MADRID (ES); CHACÓN GOMEZ, Francisco, 28049 MADRID (ES)
(74) Representative: Pons
(86) International application number: PCT/ES2019/070228
(87) International publication number: WO 2019/193233

(57) **Abstract**

The invention relates to equipment that comprises a base (5) configured to support at least one camera (2); a platform (3) on the base (5) capable of moving relative to same and configured to support at least one subject to be photographed; a lighting unit (4) installed at least on the platform (3) of the camera-support module (1), capable of moving so as to orient towards the subject to be photographed; a mobility unit which comprises at least one induction motor that controls the movement of the platform (3) on the base (5) and which has a first part provided on the base (5) and a second part provided on the platform (3) so that the movement of the first part relative to the second part moves the platform (3) relative to the base (5). The camera (2) comprises a metrology lens.

## Description

### OBJECT OF THE INVENTION

The present invention is comprised within the technical field of apparatuses for taking infinity focus photographs. More specifically, compact, desktop, and universal equipment intended for taking extreme macro photographs (infinity focus photography) is described.

### BACKGROUND OF THE INVENTION

Depth of field is critical when using microscope optics for collecting the image of a minuscule object in the sensor of a photographic camera. These optics are characterized by very low depth of field (d.o.f.) values, in the order of a few microns. Thus, only a small fraction of a captured photograph is in focus. However, if after a first photograph the camera is moved a few microns closer to the subject or object being photographed, the area now in focus will be a back area contiguous to the previous area, which can also be photographed. If this operation is performed several times, a collection of photographs is obtained, which ensures that any portion of the subject/object is in focus in at least one of the captured photographs.

Focus stacking, known as "extreme macro," consists of using software that combines all the captured images to obtain a single photograph in complete focus. To that end, only the smallest fraction that appears focused is selected from each of the images obtained according to the preceding method. Thus, the addition of all the portions in focus finally composes a single photograph in complete focus.

For the mathematical process of the stacking operation to be performed correctly, the distance traveled by the camera between pictures during the picture taking sequence must be kept constant and identical to the depth of field of the lens. These micro-movements can be achieved manually, with a vernier micrometer, or automatically.

Commercial equipment for automating the picture taking sequence (it is sometimes necessary to take hundreds of pictures) is known in the state of the art. The most well-known of these systems is *Stack Shot®,* which is a device comprising a programmable macro-rail, with a stepper motor, and mechanical transmission through a worm drive. This equipment allows an amateur to custom mount an installation for taking a given photograph. Some problems associated with this and other similar equipment are that the mounted installations are bulky, they are dismantled after having performed the work for which the installation has been configured, and to enable the use of this equipment it is necessary to possess technical knowledge in the field of photography and macro photography, in addition to knowledge in the fields of electricity, mechanics, electronics, and others. Another problem associated with this equipment is that it is neither conceived nor prepared for an application in which the object to be photographed is to be moved instead of the camera. The preparation and configuration of this commercial equipment for performing work is basically artisanal and customized for each different application.

Patent documents WO2012125519 and US2011123188 are also known in the state of the art, which describe equipment carrying out the movement between camera and subject and the lighting thereof.

More specifically, patent document WO2012125519 discloses a macro photographic apparatus for creating stacked images of a subject. It comprises a rigid longitudinal member having a longitudinal axis and including a camera mount thereon. A translation device may be fixed to said member for translating the specimen along the member toward and away from the camera mount. It likewise comprises a rotation device in the translation device which may support the specimen and enable rotation of the specimen around first and second axes that are perpendicular to the longitudinal axis of the member.

Patent document US2011123188 discloses an assembly for taking pictures including a motor-controlled rail which simplifies and automates the process of taking focus-stacked pictures. This device can be used to incrementally move a camera or other photographic device a programmable distance inward or outward in precise steps relative to an external object to facilitate focus-stacked photography. The device may include a motor-driven macro rail assembly, a controller assembly, and a camera. The camera is attached to a macro rail carriage which is driven by the motor and the controller. The device may have different modes of operation (an automatic step mode, an automatic distance mode, a total distance mode, a distance per step mode, a continuous mode and a manual mode) to yield improved results in different situations.

Patent document WO2012125519 describes compact photography equipment comprising a motor for moving a platform on which a specimen to be photographed is arranged. Said motor generates vibrations, in addition to requiring gears or worm screws for converting its rotational movement into linear movement. This introduces backlash and linear misalignments of an order of magnitude that is higher than what is required for photographic stacking.

There are known in the state of the art linear motors (by means of gears) which work perfectly when, with a macro optic, an image is taken by stacking; in this case, the movements are of 50 microns or more. Subsequently, while the use of microscope optics has become mainstream for taking these very close-up photographs, the known art (linear motors based on a worm screw) should not be used because positioning errors and mechanical backlash are substantial (when compared with depth of field of microscope lenses, for example, of 1, 4 or 15 microns). However, at present, given that this technique is used to obtain eye-catching photographs, it is being applied on a widespread scale.

However, the lack of repeatability in the results, generally including unfocused areas, is the underlying reason why, after two decades, it is still a mere form of entertainment for amateurs and has not in any way caught on among professionals and spread out into a plurality of fields of application (e.g. the study of surfaces) where the application thereof would be of great interest.

Today, suppliers of these worm screw-based linear actuators merely provide a linear motor that works, but they are unable to provide a photographic system for taking micro photographs by stacking because their operation would be unsatisfactory. What was developed at the time for macro optics (1:1 magnification ratio) is, at present, limiting the expansion and widespread availability of the technique owing to the low quality obtained with it.

Likewise, lighting systems consisting of spheres, cylinders, or other geometric shapes built with translucent materials surrounding the subject to be photographed are also described in the literature. These systems have shown to be effective today because since they diffuse the light from a flash through the translucent material, they efficiently absorb shadows in the resulting image. In any case, these systems developed for the use of applications with macro optics (1:1 magnification ratio) are not applicable when microscope optics are used since the amount of light illuminating the subject is insufficient in the case of using microscope optics. This is because, as a result of the small surface of the image being worked with, the light collected by the sensor of the camera is insufficient for capturing the image, and this cannot be rectified by increasing the exposure time because the subject would be out of focus in the image given the large magnification used in these cases.

### DESCRIPTION OF THE INVENTION

The object of the present invention relates to compact equipment for taking extreme macro photographs.

Said equipment is desktop universal equipment that allows photographs of this type to be taken for any application, such as entomology, artwork restoration, document authentication, jewelry, numismatics, criminal investigation, quality control, and/or any type of photography of subjects having sizes comprised between less than 1 mm and several centimeters. The proposed equipment is compact, desktop equipment and therefore more suitable than the assemblies from the state of the art. Any photograph in the range of from 20X (magnifying power of 20) up to 1X macro and larger, e.g. several centimeters, can be taken with the proposed equipment without requiring any modification or adaptation; in this sense it is said to be universal.

Thus, the equipment enables a series of photographs to be obtained of a subject to be photographed (such as an animal, an inanimate object, a plant, etc.). The series of photographs taken generally comprises between 50 and 600 images taken. Each of said photographs has a single shot of the subject to be photographed in sharp focus and stacking (superposing) of all the photographs is subsequently performed by means of an algorithm discriminating the area in focus of each photograph. The final image that is obtained after stacking is an image with a completely sharp object.

What is described is an effective and precise instrument specifically for the use of microscope optics (with a high magnification), basically desktop equipment ready to be used. In this case, the use of an induction motor is not a mere design option, but rather a key feature of the object of the invention, which considerably increases precision of the movement of the platform where the object to be photographed is located. This precision enables the repeatability required for optimal use of commercial stacking software.

The equipment comprises a base supporting at least one camera and a movable platform on which the subject to be photographed is placed, provided on and connected to the base. While in the equipment or assemblies of the state of the art it is the camera that moves to obtain successive images, in the equipment of the present invention the element that moves is the platform, that is, in the described equipment, the subject to be photographed and not the camera moves in a micrometric manner. Micrometric movements are thus executed on an element having little mass so as to reduce vibrations and inertias characteristic of extreme macro systems designed up until now.

A mobility unit configured for control of the movement of the fixing platform of the subject relative to the base is part of the equipment. In this case, the mobility unit comprises at least one high-precision induction motor which prevents vibrations from occurring during the process, and sharper images are obtained as a result. In the state of the art, the movement of the camera relative to the subject is performed with a worm screw. However, since the movements to be made for stacking are in the order of microns, the backlash of the worm screw moving the camera is greater than what it is to be moved, and therefore there is less repeatability in said movements. Likewise, worm screws of the state of the art cause the photographs that are taken to have different orientations (based on the moment of rotation in which the rotation of the worm screw has stopped). That is, there are misalignments in all directions. When attempting to later perform stacking operations, it is impossible to match the photographic shots because no coincidences are established. Since stacking is a mathematical operation, it requires very precise input data (in this case the photographs taken). Otherwise stacking cannot be performed or halos or lights will appear in locations where they should not in the final photograph. This makes it impossible to use movements with worm screws to obtain the image result sought with the equipment of the present invention.

The key to the equipment having an induction motor is that vibrations are completely eliminated. This furthermore allows the necessary precision in the movement of the subject to be photographed relative to the objective lens of the camera to be obtained in steps in the order of microns (preferably between 1 and 4 microns). Repeatability is thereby ensured.

The induction motor generates a magnetic field which enables moving the platform without there being contact between the platform and the guide that supports it. The use of gears for rotational movement is thereby prevented, and therefore there is no pushing and friction is minimal (thus preventing any type of vibration). There is no backlash either. It is furthermore necessary for the motor to have sufficient force to enable moving the platform with sufficient precision.

The induction motor has a first part and a second part attached to the base and to the platform, respectively. These parts are mounted on top of one another and the respective movement is performed by means of magnetic fields. It should be pointed out that in inductive positioning systems of this type, the position of the movable part is provided as feedback to a control system (managed by a motor driver), thus reaching the setpoint position with precision.

As a particularity, in cases where subjects are large and photographed with conventional 1X macro objective lenses (without using a microscope lens, with a fixed focal distance), such lenses do not require being moved closer in order to scan the area of interest, and they are also contemplated in the object of this invention. To that end, this system comprises a control system acting in this case on the focusing ring of a standard macro objective lens instead of scanning the different focus areas by means of micromovements, that is, the present invention also contemplates the case where the stacking is achieved by means of focusing the objective lens by areas and not by movement.

The difference resides in the fact that a microscope optic focuses at a single fixed distance, and therefore in order to scan the focus area of interest, the movement between subject and camera is used; however, in contrast, when a conventional objective lens is used, the scanning of the focus area of interest can be achieved by using the capacity of focusing at different distances of the objective lens itself. Control of the micromovements of the focusing ring of the camera is achieved by means of control by a computer or by means of using an autonomous accessory (Helicon F-Tube commercial control ring) acting on the objective lens of the camera by automatically moving the focusing ring a given amount of microsteps after the action of capturing each of the photographs.

In the most common exemplary embodiment, which consists of the use of microscope optics and movement of the subject towards the camera between pictures, the control system of the equipment is based on the use of a PLC (programmable logic controller). This control system sends control pulses to the camera for shooting each photograph (the camera receives this pulse by means of a standard remote control socket). To prevent vibrations, the system can be configured to send two control pulses, the first pulse for raising the mirror (reflex) of the camera and the second pulse for acting on the shutter.

Between photographs, the control system sends control pulses to the induction motor contained under the movement platform for the forward movement thereof between pictures. The length of the required forward movement is based on the magnification of the optic used (equivalent to its depth of field, d.o.f.) and the control system knows this information beforehand as it was input by means of a keyboard (by means of a touch screen interface of the equipment in an exemplary embodiment). The PLC-based control system sends a sequence of n pulses to move the induction motor and n is higher or lower according to the optic installed.

In a preferred embodiment, the forward movement for each pulse received by the motor driver can be of 1 micron. Greater magnification of the optic implies a smaller depth of field and therefore a smaller number of pulses, so scanning the entire area of photographic interest will entail a larger number of photographs.

In contrast, if a standard 1X objective lens with an F-Tube control ring has been selected, the control system will not send pulses to control the movement; it will only send pulses (signals) corresponding to the shutter release, and where appropriate to the movement of the mirror, and the F-Tube ring will act automatically by moving the focus of the objective lens between pictures, which will move a given number of micro-steps which, in this case (focus by means of the focusing ring of the camera and not by movement of the subject towards the camera) is based on the selected diaphragm aperture. A larger diaphragm aperture implies a smaller depth of field, and therefore fewer actuation micro-steps of the focusing ring, which in turn translates into more photographs for scanning a given distance of photographic interest.

An essential feature of the invention is that it comprises and uses microscope optics specifically of a metrological range. Conventional microscope optics used in biology, which were positioned at about 1 mm from the subject to be photographed, are not used. If this were the case, since the optic is very close to the subject, lighting elements could not be used (they would not fit between the camera and the subject) and a flash is used, exaggerating the amount of light and doing so in a tangential manner.

The described equipment is designed for using microscope optics of a metrological range having a working distance of at least 25 mm. In an exemplary embodiment, said working distance can be around 30 mm in diameter, and the working distance between the optic and the subject is 32-35 mm. This characteristic contributes to facilitating the use of light devices generating correct lighting of the subject, and providing continuous light (LED ((light-emitting diode) type))), which enables the lighting scheme to be known beforehand and thus preventing the occurrence of undesired shadows.

Working with metrology lens with a working distance of at least 25 mm enables having sufficient space between the optic and the subject to be photographed so as to place the lighting unit in said space.

The equipment of the present invention comprises a metrology lens because a macro optic allows a 1:1 image ratio, which is insufficient for the human eye to see the details that are to be photographed with this equipment.

Nor could a conventional microscopy optic be used because it does not provide the quality or sharpness comparable to those of metrology lenses. With these microscopy optics, it is furthermore necessary to work at a distance of between only 1 mm and 3 mm from the subject to be photographed. This would make it necessary to use a flash.

The most important problem associated with the use of a flash is that it is impossible to know beforehand what the lighting of the image will be like when the photograph is taken because it is only triggered when the photograph is taken. This is very important in the present invention because, as described above, it is necessary to stack all the photographs that have been taken to obtain the final photograph.

In many cases, such as for example when parts of a museum are photographed, or when elements of a crime scene are photographed, access is generally only granted one time, and the photographs that are taken must have a certain guaranteed quality. Thus, knowing the lighting beforehand is essential for the purpose of preventing undesired shadows which may hinder stacking or can deprive the final image final of sufficient quality and details.

Moreover, when the focusing ring of an objective lens is used to scan the different shots to be focused on, the subject changes in size between pictures, but when the relative movement between optic and subject is used to search for the different planes of focus (as in case of microscope optics), in addition to changing the size of the subject, it also changes the viewpoint of the optic, since the relative optic-subject distance has changed, and therefore a slight barrel distortion appears which increases the closer it is to the subject.

Having said that, during the computer stacking method, the first action of the stacking software consists of aligning the series of photographs taken, but this process of aligning consecutive pictures (which corrects the change in size between pictures) is much more complex when the barrel distortion corresponding to the change in viewpoint of the optic is present. As a result, the occurrence of halos and "ghosting" during the mathematical stacking method makes the final processing of the stack photograph more complex in this case.

As a result, this invention proposes an exemplary embodiment which uses 20X, 10X, and 5X microscope optics in the usage version implying control of movement, but in contrast, instead of using 2X magnification microscope optics, it instead proposes the use of a 1X macro objective lens with an extension tube to obtain 2X magnification, together with control of the focusing ring (without movement between the camera and subject) because the relative optic/subject position therefore does not change and barrel distortion is prevented. This substantially improves the final result obtained, or in any case reduces the processing required to correct the final image.

An extension tube is an additional extension installed between the plane where the image is formed and the optic, and it has the purpose of achieving the image being formed right at the focal distance from the optic, a parameter defined by each optic manufacturer. The purpose of the extension tube is clear with the use of microscope optics; its function is to adjust the focal distance between optic and sensor. When used with conventional variable-focus objective lenses, its purpose is to increase the focal distance in order to increase the magnification of the optic.

As a result of the extension tube, high-quality photographs can be obtained with the metrology lens of the equipment, with high quality, equivalent to images obtained with transmission or scanning electron microscopes (which are much more expensive), for 5X, 10X, 20X magnifications.

Another exemplary embodiment or possibility of using the system described in this invention is to couple the microscope optic immediately in front of a standard 1X macro objective lens provided with a focus. In this case, the macro objective lens receives the image already magnified by the microscope optic, whatever the focal distance selected by the focusing ring may be, and therefore the focus area of interest may be scanned as described above by use of the focusing ring and not by movement. The quality of the obtained image is not the same as the quality obtained with the microscope optic, extension tube, and micrometric movement of the subject, but it allows the use of the system in a portable manner, that is, by means of a tripod, the camera, the F-Tube ring, the macro objective lens, and the microscope optic, all contained in a single integral unit, which enables the system to be used in a portable manner in the field.

In this case, the camera is configured for continuous shooting and a locking remote shutter release is used. When the camera takes a shot, the F-Tube ring changes the position of the focusing ring such that the following picture is taken at another focal distance and so on until the order of continuous shots is halted by unlocking the remote shutter release lock. If a 10 % perimeter of the obtained photograph (area of greater aberrations due to the conjunction of both lenses) is disregarded, the result of the obtained image is acceptable optically speaking. When photographing planar surfaces in which a small depth of field is scanned, the result is very good (for example, to obtain the relief of ink printed on paper money). The concept of 10X and 5X optics coupled to a 1X macro objective lens has been studied and very satisfactory results have been obtained.

The equipment likewise comprises a unit of different lighting elements with at least one LED. In the solutions of the state of the art, it is impossible to predict what the final lighting of the stacked photograph and therefore the shadows on the subject generated by same will be like exactly. Furthermore, the use of a flash generates flat images. In the present invention, the lighting elements are included in the equipment itself, on the base or on the platform, and different configurations can be selected based on the type of subject and the size thereof. This allows surround lighting, similar to that of a photography studio, to be used, and this is possible as a result of the use of metrology lenses, which use a distance between optic and subject of more than 30 mm, allowing the installation of LED lamps or systems between optic and subject.

In cases where the subject has a small size, such as insects of less than 10 mm for example, the lighting elements are preferably mounted on the movable platform and therefore integrally move with it and with the subject. Therefore, when the specific orientation of the lighting elements is adjusted, this position remains immovable relative to the subject throughout the entire sequence of photographs such that the lighting scheme does not change.

The unit of lighting elements of the equipment is configured such that the lighting elements focus all the lighting on one point (where the subject is provided). All the lighting elements can be oriented and/or moved towards said single light focusing point. In a particular application, the LEDs are provided inside a hollow geometric body, the interior space of which is intended for housing the subject to be photographed and having an opening oriented towards the camera. In a preferred embodiment of the invention, said hollow geometric body is a sphere which allows selecting from among 12 different lighting areas, oriented and focused towards the center (towards the subject to be photographed), those that are the most appropriate for a photograph in question.

Another lighting accessory is effective for processing forensic images and includes a module with different LED lamps emitting light having wavelengths of forensic interest, for example 365, 395, 410, 470, 505, 530, 620, and 850 nanometers. These wavelengths can reveal biological fluids, special ink features, and other phenomena not observed with visible light.

This compact desktop equipment allows taking sequences of photographs for stacking objects of any size required, ranging from subjects not visible to the naked eye to subjects of several centimeters. Its compact constitution and the use of a mobility unit by induction prevents the usual vibrations characteristic of the state of the art, and the lighting unit, which prevents the use of flash, is highly efficient for a correct lighting composition of the photograph. The results in terms of quality and speed are far superior to those obtained with the known systems. The use of optics of a metrological range (not a biological range as is normally used in this field) provides sharpness, absence of distortion, and a maximum color range, in addition to allowing suitable lighting of the subject.

Furthermore, the proposed equipment is desktop equipment taking up minimal space, unlike any previously known equipment or assembly. Another advantage is that it is always ready to be used and allows a very high-quality stacking of hundreds of photographs to be obtained in a few short minutes.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a view of the compact equipment for extreme macro photography. The camera has not been depicted, and this example shows a light sphere as the lighting source.
Figure 2 shows an exemplary light sphere-type lighting system containing the support of the subject on a five-axis positioner.
Figure 3 shows the extension module, a piece of equipment that is external to the main unit of the equipment, for photographing subjects of several centimeters (it includes its own lighting system).
Figure 4 shows an accessory of the equipment for supporting large-sized subjects which can be installed both in the main unit and in the extension module.
Figure 5 shows an accessory of the equipment for use in ballistic photography. The base of the accessory is compatible with the platform of the main unit and with the extension module.
Figures 6A-D show several embodiments of the equipment of the invention with cameras with different optics to enable being adapted to the subject to be photographed.
Figure 7 shows a photograph of printing ink on a €50 bill (2x3 mm), 10X optic.
Figure 8 shows a photograph of cellulose fibers in a sheet of paper (2x3 mm), 10X optic.
Figure 9 shows a photograph of marks on a bullet caused by the grooves in the barrel of a gun (2x3 mm), 10X optic.

### PREFERRED EMBODIMENT OF THE INVENTION

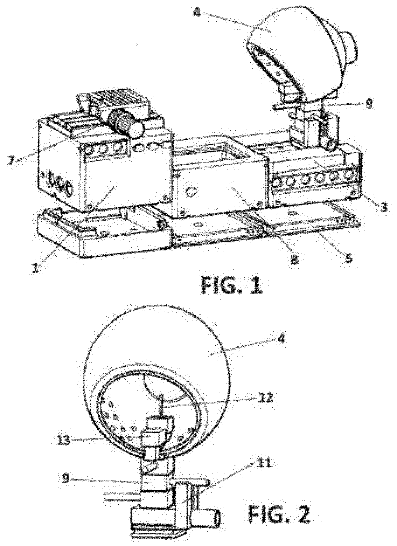

Below, exemplary embodiments of the present invention are described with the aid of figures 1 to 9.

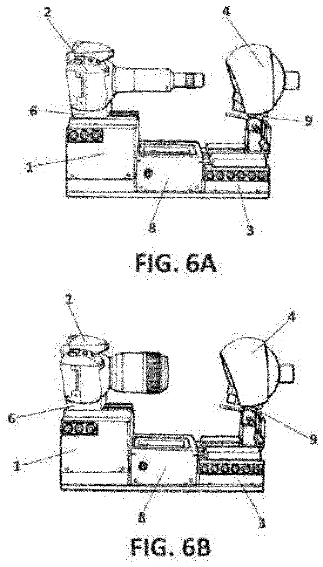

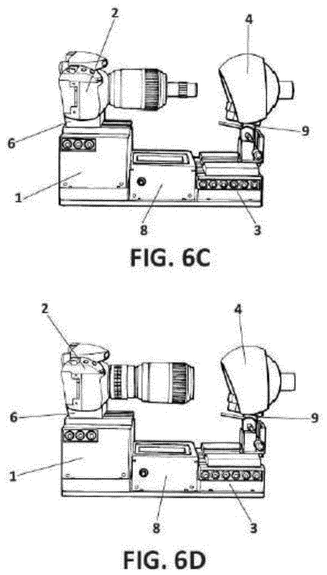

As can be observed in Figure 1, the compact equipment for extreme macro photography comprises a base (5) supporting a fixing module (1) of a camera (2), a control module (8), which can be a PLC with a touch screen, and a platform (3) provided on the base (5) and capable of moving relative to same. The base (5) is configured to support at least one camera (2), as observed in Figures 6A-D. The platform (3) is configured to support at least one subject to be photographed. Furthermore an at least two-axis positioner, and preferably a five-axis positioner, can be installed on the platform (3) to fix the subject and orient it, a lighting unit (4) (which can be a light sphere for example) and a plurality of accessories.

It is a compact and portable piece of equipment that can be taken anywhere. This makes it particularly interesting in applications where photographs must be taken of details that cannot be seen by the human eye in a specific place. This may be, for example, the case of fingerprints (even on concave or convex surfaces), organic substances present at a crime scene, minute cracks, and deteriorations of another type present in works of art or antiquities (the prior knowledge of which allows deciding, for example, if they can be moved, how to move them, etc.)

The positioner, preferably a five-axis positioner, allows the subject to be photographed to be oriented in any direction relative to the camera. In an exemplary embodiment wherein the lighting unit (4) is a light sphere, said sphere contains a group of LEDs between 3 mm and 5 mm in diameter, radially oriented towards the subject to be photographed. The lighting unit (4) provides the advantage of knowing the shadow and light scheme before taking the photograph, unlike what occurs with a flash.

The equipment may likewise comprise an additional lighting unit with lighting elements which include at least one LED diode and are installed on the platform (3) or on the camera-support module (1). The lighting elements are capable of moving so as to orient towards the subject to be photographed. The lighting unit (4) preferably comprises between 20 and 200 LEDs. Also preferably, the size of those LEDs is between 3 mm and 5 mm. That is, miniaturized LED lighting is used. As they are a plurality of small-sized LEDs, they can be provided according to different spatial patterns (as a result of there being at least 25 mm of space between the optic and the subject to be photographed).

It also comprises a mobility unit which comprises at least one induction motor. The induction motor is provided under the platform (3) and is configured for control of the micrometric movement of the platform (3) relative to the base (5).

An essential feature of the proposed equipment is that metrology lenses with a working distance of at least 25 mm are specifically used. Said working distance is more preferably at least 30 mm, and in an exemplary embodiment it is 33 mm for 5X, 10X optics and 35 mm for 20X optics.

In a possible embodiment of the invention, the equipment also comprises at least one extension tube by means of which the metrology lens is coupled to the camera (2).

The LED diodes of the lighting unit (4) emit light of any wavelength of the magnetic spectrum comprised between infrared light (IR) and ultraviolet light (UV). This allows images to be obtained that other types of lighting are incapable of photographing, as in the case of samples of an organic origin (blood, urine, semen, saliva, etc.) and inorganic origin (paper, inks, antiquities, etc.). This is not possible with the equipment of the state of the art in which flash is used because the type of radiation cannot be selected. It also represents an advantage relative to the use of lanterns having filters acting on a small amount of light but working on normal light.

Furthermore, the lighting unit (4) can be moved integrally with the subject to be photographed or can be moved independently of the subject to be photographed. To control the lighting of said subject to be photographed, the LEDs are provided between the camera (2) and the subject to be photographed, in a space corresponding to the working distance of the metrology lens.

As described above, the working distance is preferably between 30 mm and 40 mm. It is in the space existing between the metrology lens and the subject to be photographed where the lighting unit (4) is preferably provided. The LEDs can be provided in a plane of a lamp or in a unit with adjustable lamps (17) mounted on a flexible arm. In another exemplary embodiment, the LEDs are provided inside a hollow geometric body, the interior space of which is intended for housing the subject to be photographed and having an opening oriented towards the camera (2).

Furthermore, when the lighting unit (4) comprises a plurality of LEDs, the LEDs can be activated independently of one another. It is thereby possible to select the lamps or sections of the corresponding sphere or geometric figure which are to be activated in order to illuminate the object to be photographed in an optimal manner.

In an exemplary embodiment of the equipment as shown in Figures 1, 2, and 6A-D, the lighting unit (4) comprises a light sphere with free space in its interior and comprising at least one opening. Said light sphere is attached to the platform (3) and the subject to be photographed is placed in its interior. The opening of the light sphere is oriented towards the camera (2).

The spatial arrangement of a large number of LEDs (for example between 70 and 100) inside a hollow sphere 10 cm in diameter, in the center of which the subject to be photographed is placed). Furthermore, the lighting of the LEDs may be controlled by sections independently. Reliable information about what the lighting is like and the intensity thereof on the object is thus provided before taking the photograph.

This embodiment, which can be observed in Figure 1, is particularly indicated for cases where the subject to be photographed is of a small size. In these cases, it is essential for shadows not to be produced while shooting the images and this configuration ensures that this will be the case. Since the light sphere is attached to the platform (3), it moves with same and with the subject, ensuring that the lighting unit (4) always remains in the same relative position relative to the subject.

In this exemplary embodiment wherein the lighting element is a light sphere, the latter is furthermore integral with a support of the subject located on the five-axis positioner, and therefore it is always oriented together with the subject when the five-axis positioner controlling the angle of orientation of the subject is actuated. The support of the subject is any accessory which allows different types of subjects to be fixed on the five-axis positioner. This positioner-support-sphere unit (Figure 2) allows different types of manipulation, being able to extract/position the subject within the sphere or to remove same for positioning the subject and placing the sphere once the subject is oriented. That is very useful for taking a series of equivalent photographs of various similar objects.

Figure 2 shows a view of the light sphere. In an exemplary embodiment there are 72 sealed beam, high-intensity LEDs which are grouped in 12 sections of 6 LEDs with independent control for each section. Furthermore, the light sphere may comprise a back accessory configured to install backgrounds and/or to control the backlighting of the subject, which is achieved with a group of independent LEDs installed for this purpose in the back section of the sphere. An embodiment in which the light sphere is mounted on a vertical mover (11) which is connected to the positioner (9) is seen in said Figure 2. A support for the subject (13) and the subject (12) can also be seen.

In other exemplary embodiments, the lighting elements (4) are attached to the base (1) and therefore do not move following the same movement as the subject (that is, the movement of the platform (3)). This configuration of the equipment is generally used when the subject has larger dimensions, and therefore 1X optics with control of the focusing ring are used, so the relative optic/subject position does not change during successive photographs.

Another lighting unit (4) may consist of a lamp which is frustoconical in a preferred exemplary embodiment and could be a conical lamp, a spherical lamp, or a lamp with a parallelepipedic configuration, a surround lamp with 32 LEDs mounted directly on the microscope optic and comprising a sandwich with several layers containing the high-intensity LED diodes in the interior thereof and coupled so as to surround said microscope optic, without interfering with the optic-subject working distance, which is about 33 mm in these lenses having a metrological configuration used in this equipment. This lighting system is very practical for photographing non-bulky (flat) surfaces.

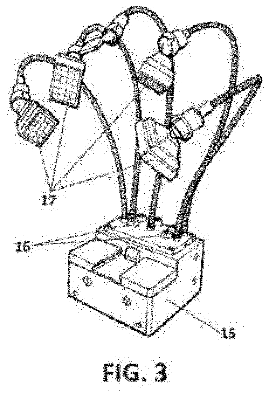

In other configurations, to photograph bulky objects that cannot be contained inside the sphere of LEDs, the equipment may comprise a plurality of adjustable lamps (17), for example three on each side of the base (1), or six in an extension module (15) for example. The extension module (15) can be observed in Figure 3 for example, and it is an external unit required for photographing large-sized objects because the camera-subject distance in this case is considerably larger than that required for very small objects. A unit consisting of switches (16) allows the configuration of the lighting scheme on the subject.

In a preferred embodiment of the invention, the equipment comprises a camera fixing module (6) on which the camera (2) is positioned to be supported on the base (1). This fixing module (6) comprises a rail slider (7) for the fine adjustment of the focus of the first photograph of the series. That is, the rail slider (7) allows the camera (2) to be moved on the base (1) to the specific position in which the first image of interest of the subject is positioned for taking the first photograph. It starts from this position to take the shot of all the consecutive images for stacking. This occurs by moving the subject closer to the optic, so the plane of focus is located increasingly farther back than the previous one (since the focal distance is fixed in microscope optics).

The equipment also preferably comprises a PLC programming module (8) for programming the movement distance, the location of beginning and end of stroke and other parameters, including the configuration. It is used for example to indicate the type of optic for the system to calculate the forward movement distance between photographs, to select the type of control action corresponding to the mode of use of the system (control of focusing ring or micrometric movement), to select between the possibility of raising the mirror of the camera tenths of a second before taking the photograph or not doing so, and other configuration possibilities.

The programming module (8) controls the forward movement of the motor, the movement of the mirror of the camera (2), and the shooting of the camera (2). Reflex cameras have an inner mirror to allow the light to alternatively reach the viewer or the sensor. The movement of this mirror causes significant vibrations, so in photographs with a high magnification (magnifying power) it is possible to configure the mirror to move in a first step to subsequently move the curtain of the diaphragm in the absence of vibration, and this is done this way for hundreds of consecutive photographs. Certain camera manufacturers avoid this drawback by means of hardware included in the camera, but this is not common.

As described above, the movement of the platform (3) supporting the subject to be photographed is controlled by means of an induction motor (based on magnetic fields). In an exemplary embodiment, said motor allows movements of 1 micron with a precision of 0.05 microns, and it is an instantaneous movement. Due to the fact that there is a position control loop that is provided with feedback, movement errors do not build up.

In an exemplary embodiment, the platform (3) supports a micrometric positioning tower (9) or five-axis positioner, having freedom of movement on five axes (the sixth is the direction of the movement of the subject towards the lens of the camera and it is performed by means of the movement of the platform (3)) for the positioning of the subject. The six possible degrees of freedom are the forward movement of the subject (x), height (y), lateral movement (z), and three rotations on said axes.

In cases where subjects of a size greater than 24x36 mm (24x36 mm is the size of an FX sensor, which determines 1X magnification) are to be photographed, the distance between the camera (2) and the subject must be greater than the distance used for taking photographs of small-sized subjects. An example could be when an entomologist photographs a butterfly with a span of 10 cm, instead of a small insect, or when the Forensic Science Service photographs fingerprints revealed on a gun, instead of the grooves present on a bullet that has been shot.

For these cases, the equipment may additionally comprise the extension module described above, with an external base separate from the main base (1). The extension module comprises an extension platform which is equivalent in its dimensions and elements for fixing it to the platform (3) described above, for the purpose of being able to share the same accessories used therein. This extension module contains an additional lighting unit (in addition to being able to share the other systems already discussed) and is intended for being installed at a distance of between 10 cm and 60 cm centimeters from the base (1) and allows the subject to be moved away from the camera (2) by the distance required for a large-sized subject to fit within the entire perimeter thereof.

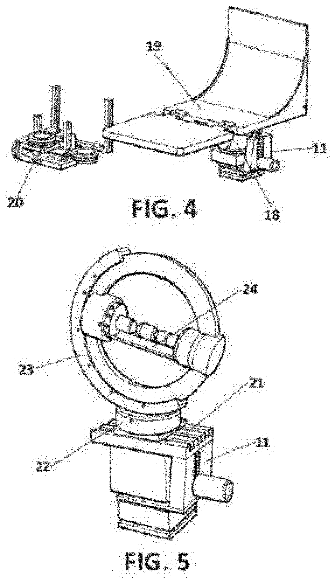

A second accessory of the equipment for supporting large-sized subjects which can be installed either on the platform (3) for micrometric movement or on the extension module (15) is observed in Figure 4. It comprises a work base (19) articulated by means of bearing (18) and allows the subject to be positioned on said work base (19) or on different support fixing parts (20), and it further includes a vertical mover (11) in its lower portion for vertical movement of the unit. It can be on the platform (3) of the main equipment in micro and macro photography up to 1X or in the extension module (15) for large-sized objects for 1X or 1X+ macro photography.

In another exemplary application of the invention, the equipment comprises an accessory such as the one shown in Figure 5 for taking extreme macro photographs of projectiles so as to compare the grooves left on their surface after going through the bore of the barrel of a gun and having the ultimate objective of being used in a trial as evidence. The action guideline is strict and the projectile or bullet must be photographed at different angles, rotations, and positions. The accessory shown in Figure 5 allows a projectile to be fixed and rotated on four different axes. It also includes a micrometric sliding guide on the up-down axis for the correct positioning thereof opposite the objective lens of the camera (2). It likewise comprises a vertical mover (11) for vertical movement of the unit, a lateral mover (21), an element which allows rotation about the z axis (22), an element which allows rotation on the axis of the optic (23), and another element which allows rotation on the axis of the projectile (24).

In a conventional mode of use of the equipment, preferably micrometric positioning control is used for 20X, 10X, and 5X magnifications (microscope optics), and a standard 1X macro objective lens with focus control is used for 2X and large-sized objects. The possible combinations of standard optics according to the size of the object to be photographed and covering the entire range of different sizes of possible objects (the size of the effective framing for each combination can be seen here) are:
**20X**// Optic - 20X and extension tube. Control mode by means of moving the inductive platform. D.O.F. 1.6 microns. **1.2x1.8 mm framing.** Work distance 20 mm.
**10X**// Optic - 10X and extension tube. Control mode by means of moving the inductive platform. D.O.F. 3.5 microns. **2.4x3.6 mm framing.** Work distance 33 mm.
**5X**// Optic - 5X and extension tube. Control mode by means of moving the inductive platform. D.O.F. 14 microns. **4.8x7.2 mm framing.** Work distance 34 mm.
**2X**// 105 mm macro objective lens (or equivalent) + focusing control ring+ extension rings (36+20 mm) with focusing transmission. Control mode by moving the focusing ring (without movement). **12x18 mm framing.** Work distance 118 mm.
**1X**// 105 mm macro objective lens (or equivalent) + focusing control ring. Control mode by moving the focusing ring (without movement). **24x36 mm framing.** Work distance 314 mm.
**1X+**// 105 mm macro objective lens (or equivalent) + focusing control ring. Control mode by moving the focusing ring (without movement). **The 2A extension module is used** (accessory support/lighting) which allows the subject to be sufficiently separated from the optic. **Framing > 24x36 mm.** Work distance >314 mm.

To work with the described equipment, the configuration and suitable optic (according to the above) for the size of the subject to be photographed must first be selected and the subject must be positioned on its corresponding support (directly on the platform (3), on the positioner (9), on the first accessory, on the second accessory, on the third accessory, etc.), oriented and framed using the five-axes micrometric positioning system.

The optic used for the programming module (8) to determine the spacing between consecutive pictures, that is, the distance in microns the platform (3) will be moved between each shoot, is subsequently selected in the programming module (8). The camera (2) is subsequently moved with the rail slider until finding the first focusing point of the subject, where a point of the subject is in focus for the first time. This point is the start of the series and is selected on the touch screen. The platform (3) subsequently moves with the subject until the entire depth of photographic interest has been scanned; the last point of interest determines the end of the series (the last photograph) and is selected on the touch screen. At this time it is no longer necessary to input more data in the equipment, and all the photographs are taken. The photographs are subsequently stacked by means of suitable software to obtain the final photograph in infinity focus.

If a standard macro objective lens is used (situation without any movements), the steps to be followed are the same, with the exception of the control system being limited to shooting the series of photographs and the F-Tube ring being in charge of the movement for focusing the camera as discussed.

The present invention also describes alternative equipment which allows extreme macro photographs to be taken in a portable manner. In this case, the mounting of a 5X or 10X microscope optic on the 1X macro objective lens is considered, with the stacking being controlled in a completely automatic manner with a *Helicon FB Tube* ring (focus and shoot). For the portable use of the system, the use of an external locking shutter release (in addition to selecting continuous shooting in the camera) has already been described for autonomously taking the series of photographs.

In this case of portable use, the PLC-based control system is not provided; as a result, to prevent vibrations resulting from the movement of the mirror of the camera (2), the photographs can be shot in display mode in the screen of the camera (which is less suitable since the camera may generate electromagnetic noise due to heating). In this case, as long as the remote shutter release is locked, the mirror will continuously be maintained in its raised position.

The proposed equipment is proven to be effective and allows extreme macro to be performed with conventional optics. The novelty resides in the fact that by installing a microscope optic such as the one used in this equipment immediately in front of the standard 1X objective lens, it is possible to obtain photographs for the extreme macro technique. That is a considerable advantage since it allows the portable use of the technique, by installing the camera (2) on a tripod, with only the described accessories: the optic system (standard 1X objective lens and a microscope optic) and the *FB Tube ring.* This is of vital importance for example for the Forensic Science Service, because it allows a portable extreme macro system to be provide which can be used directly at a crime scene without having to transport the medium to be photographed to a laboratory. Up until now, in known documents of the state of the art and related literature it was indicated that this attachment of optics was not possible; however, during the process of developing the present invention it was found that high-quality extreme macro photographs can be taken using this technique.

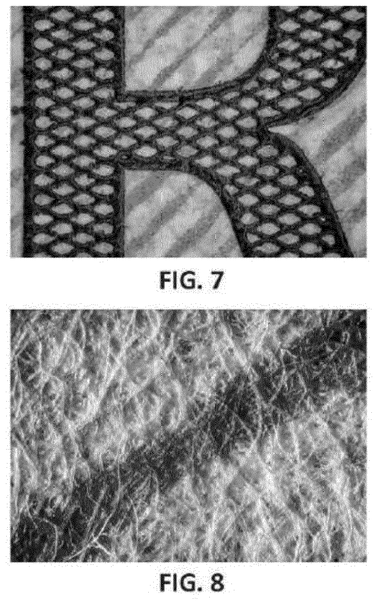

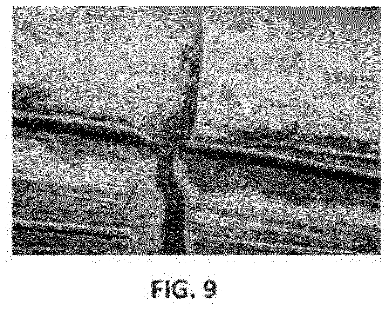

Figures 7 to 9 show photographs taken with the equipment of the present invention. More specifically, there can be seen in Figure 7 a photograph of printing ink on a €50 bill (2x3 mm), 10X optic; in Figure 8, a photograph of cellulose fibers in a sheet of paper (2x3 mm), 10X optic; in Figure 9 a photograph of marks on a bullet caused by the grooves of the barrel of a gun (2x3 mm), 10X optic.

## Claims

1. Compact equipment for extreme macro photography, **characterized in that** it comprises:
- a base (5) configured to support at least one camera (2) on its fixing module (1);
- a camera (2);
- a platform (3) provided on the base (5) and capable of moving relative to same, and being said platform (3) configured to support at least one subject to be photographed;
- a lighting unit (4) installed at least on the platform (3) or the module (1) and capable of moving so as to orient towards the subject to be photographed;
- a mobility unit which comprises at least one induction motor that controls the movement of the platform (3) on the base (5).

2. Compact equipment for extreme macro photography according to claim 1, **characterized in that** the induction motor comprises a first part provided on the base (5) and a second part provided on the platform (3) so that the movement of the first part relative to the second part moves the platform (3) relative to the base (5).

3. Compact equipment for extreme macro photography according to claim 1, **characterized in that** it comprises a metrology lens with working distance of at least 25 mm configured to be coupled to the camera (2).

4. Compact equipment for extreme macro photography according to claim 3, **characterized in that** it further comprises an extension tube configured to couple the metrology lens to the camera (2).

5. Compact equipment for extreme macro photography according to any one of the preceding claims, **characterized in that** on the platform (3) there is an at least two-axis positioner on which the subject to be photographed is placed and it is capable of moving on up to five axes so that upon changing its position, the orientation of the subject relative to the camera (2) changes.

6. Compact equipment for extreme macro photography according to claim 5, **characterized in that** the positioner is a five-axis positioner.

7. Compact equipment for extreme macro photography according to any one of the preceding claims, **characterized in that** the lighting unit (4) comprises at least one LED diode (*light-emitting diode*) having a size comprised between 3 mm and 5 mm.

8. Compact equipment for extreme macro photography according to claim 7, **characterized in that** it comprises between 20 and 200 LED diodes.

9. Compact equipment for extreme macro photography according to any one of claims 7 to 8, **characterized in that** the LED diodes emit light of any wavelength of the magnetic spectrum comprised between infrared light and ultraviolet light.

10. Compact equipment for extreme macro photography according to any one of the preceding claims, **characterized in that** the lighting unit (4) integrally moves the subject to be photographed.

11. Compact equipment for extreme macro photography according to any one of claims 1 to 9, **characterized in that** the lighting unit (4) moves independently of the subject to be photographed.

12. Compact equipment for extreme macro photography according to any one of claims 3 to 11, **characterized in that** the LEDs are provided between the camera (2) and the subject to be photographed, in a space corresponding to the working distance of the metrology lens.

13. Compact equipment for extreme macro photography according to any one of claims 7 to 12, **characterized in that** the LEDs are provided on a plane of a lamp or in a unit with adjustable lamps (17) mounted on a flexible arm.

14. Compact equipment for extreme macro photography according to any one of claims 7 to 12, **characterized in that** the LEDs are provided inside a hollow geometric body, the interior space of which is intended for housing the subject to be photographed and having an opening oriented towards the camera (2).

15. Compact equipment for extreme macro photography according to claim 8, **characterized in that** the LEDs of the LED unit are activated independently.

16. Compact equipment for extreme macro photography according to claim 1, **characterized in that** it further comprises a rail slider (7) configured for millimetric control of the movement of the camera (2) relative to the subject to be photographed.

17. Compact equipment for extreme macro photography according to any one of the preceding claims, **characterized in that** it further comprises a PLC programming module (8) configured for control of the movement of the platform (3) relative to the base (1) and to control the actuation of the camera (2).

18. Compact equipment for extreme macro photography according to any one of the preceding claims, **characterized in that** it further comprises an extension module with an external base (15), an extension platform with the same measurements as the platform (3), and an additional lighting unit, and being attached to the base (15) by means of guides configured to attach them at a given distance based on the size of the subject to be photographed.
